# EUROPÄISCHE PATENTSCHRIFT

(11) **EP 3 156 310 B1**
(45) Veröffentlichungstag und Bekanntmachung des Hinweises auf die Patenterteilung: **04.12.2019**
(21) Anmeldenummer: 16002131.7
(22) Anmeldetag: 04.10.2016
(51) Int. Cl.: B62D 63/06, B62D 55/00

(54) **ANTRIEBSLOSES LANDWIRTSCHAFTLICHES HILFSFAHRZEUG**
DRIVE-LESS AGRICULTURAL AUXILIARY VEHICLE
VÉHICULE AUXILIAIRE AGRICOLE SANS ENTRAÎNEMENT

(30) Priorität: 18.10.2015 DE 102015013378
(43) Veröffentlichungstag der Anmeldung: 19.04.2017
(73) Patentinhaber: ANNABURGER Nutzfahrzeug GmbH, 06925 Annaburg (DE)
(72) Erfinder: Achilles, Jens, 06925 Annaburg (DE)
(74) Vertreter: Einsiedler, Johannes

(56) Entgegenhaltungen:
- WO-A1-2015/052310
- WO-A2-2006/111693
- DE-A1- 19 704 319
- US-A- 3 926 272
- US-A- 4 391 343

## Beschreibung

Die Erfindung betrifft ein antriebsloses landwirtschaftliches Hilfsfahrzeug mit mindestens einer Fläche oder Plattform , wobei die Fläche oder Plattform zur lasttragenden Aufnahme eines Lasten-, Ausbring- und/oder Transportanhängers ausgebildet ist, und jeweils einem Gurtbandlaufwerk an den beiden Längsseiten der Fläche oder Plattform , wobei die Fläche oder Plattform zwischen den Gurtbandlaufwerken zum Verändern der Gesamtbreite, zusammen- oder auseinanderklappbar ist.

Es ist bekannt, dass sich im landwirtschaftlichen Transportwesen häufig ein Zielkonflikt zwischen einer effizienten und kostengünstigen Arbeitserledigung und einem schonenden Umgang mit den vorhandenen Ressourcen ergibt. So gilt es einerseits durch immer größer und damit auch schwerer werdende Arbeits- oder Transportmittel die Schlagkraft zu erhöhen, um eine termingerechte, verlustarme und kostengünstige Arbeitserledigung zu ermöglichen. Andererseits gilt es jedoch die Bodenbelastungen soweit wie möglich zu reduzieren, da die mit der Schlagkraft ansteigenden Fahrzeuggewichte oftmals zu erhöhten Schadverdichtungen führen. Aus diesen Verdichtungen resultieren wiederum Ertragsverluste, da beispielsweise Ernteplanzen im verdichteten Bereich im Wachstum gehemmt sind. Um diesen Verdichtungen und den dadurch entstehenden Verlusten entgegenzuwirken sind verschiedene Maßnahmen bekannt, die darauf gerichtet sind, den Flächendruck auf den zu behandelnden Boden zu verringern.

Die offensichtlich einfachste Maßnahme liegt im Einsatz kleinerer und leichterer Arbeits- und Zugmaschinen sowie von Transportfahrzeugen oder Anhängern mit reduzierter Nutzmasse. Mit diesen sind die genannten Effizienz- und Kostenziele jedoch meist nicht zu erreichen. Ebenso ist ein Verzicht auf Fahrten bei feuchtem und damit druckempfindlicherem Ackerboden aus Termingründen meist nicht möglich.

Sollen negative Auswirkungen hoher Fahrzeuggewichte reduziert werden, bieten sich Maßnahmen zur Reduzierung der auftretenden Flächenlast an. Dies ist z.B. durch Verwendung breiter Niederdruckbereifung, ggf. kombiniert mit einer variablen Absenkung des Reifeninnendrucks, bei Fahrt auf weichem Ackerboden erreichbar. Die genannten Niederdruckreifen sind jedoch teuer in der Anschaffung und weisen einen deutlich höheren Verschleiß als herkömmliche Reifen auf. Die kostenintensiven Einrichtungen zur variablen Absenkung des Reifeninnendrucks bedingen wiederum zusätzliche Rüstzeiten zwischen Transportfahrt und Feldfahrt.

Auch in der Verwendung von Gurtbandlaufwerken, insbesondere solchen mit gefederten und/oder gedämpften Stütz- und/oder Antriebsrollen, kann eine sinnvolle Maßnahme zur Reduzierung der resultierenden Bodendrücke gesehen werden. Solche herkömmlichen Gurtbandfahrwerke sind in unterschiedlichsten Ausführungen erhältlich. Als repräsentatives Beispiel könnten herkömmliche Gurtbandfahrwerke der Serie ST032 von Soucy Holding inc. verwendet werden. Es jedoch durch die Vielzahl benötigter unterschiedlicher Arbeits- und/oder Transportmaschinen unwirtschaftlich, sämtliche Maschinen mit derartigen Gurtbandfahrwerken auszurüsten.

So schlägt die WO 2006 111 693 A2 vor, ein Hilfsfahrzeug mit zwei Gurtbandfahrwerken und einer dazwischen angeordneten Plattform auszustatten, auf die mittels einer Windeneinrichtung ein landwirtschaftlicher Anhänger aufgeladen werden kann. Dazu ist der Anhänger am Rand des zu bestellenden Feldes abzukuppeln und das Hilfsfahrzeug an der Zugmaschine anzukuppeln. Durch die große Aufstandsfläche der Gurtbandfahrwerke wird die schadhafte Verdichtung des Ackerbodens gering gehalten. Das Umkuppeln bedingt jedoch eine nachteilig lange Rüstzeit vor und nach der Feldfahrt, was sich wiederum negativ auf die Wirtschaftlichkeit auswirkt. Zudem ist durch die nötiger Weise großen Abmaße des Hilfsfahrzeug ein Transport auf öffentlichen Straßen, z.B. zur Überführung des Hilfsfahrzeugs von einem Feld zu einem anderen Feld, nicht oder nur bedingt möglich.

Dazu ist aus der DE 10 2006 053 683 A1 eine Fahrwerksanordnung zum Ankuppeln an landwirtschaftliche Zugmaschinen bekannt, die zum Ernteeinsatz eingesetzt wird. Diese Fahrwerksanordnung ist zum Aufnehmen eines von einem LKW abgekuppelten Sattelaufliegers eingerichtet. Sie weist zwei zueinander verstellbare Längsträger auf, an denen Gurtbandlaufwerke angeordnet sind. Die Fahrwerksanordnung kann durch eine Zugmaschine mit den Längsträgern unter den Sattelauflieger rangiert werden und diesen aktiv anheben. Zum Straßentransport ist die Fahrwerksanordnung in der Gesamtbreite verstellbar. Das zum Aufnehmen eines Sattelaufliegers ausgebildete Fahrgestell kann dabei keine anderen Transportmittel als Sattelauflieger tragen und erfordert wiederum durch das nötige Ab- und Umkuppeln sowie das Anheben des Sattelaufliegers, lange Rüstzeiten mit den bekannten negativen Auswirkungen auf Wirtschaftlichkeit und Bedienkomfort.

Des Weiteren ist die WO 2015 052 310 A1 darauf gerichtet, ein antriebsloses Hilfsfahrzeug mit zwei parallelen Gurtbandfahrwerken und einer dazwischen angeordneten Plattform weiterzuentwickeln. Sie offenbart, dass ein Transportanhänger direkt ohne Abkuppeln von der Zugmaschine auf das Hilfsfahrzeug gefahren werden kann, um die Rüstzeit zu minimieren. Dabei ist es jedoch durch die Höhe der Gurtbandfahrwerke unumgänglich, die Plattform zwischen den Fahrwerken anzuordnen. Wären die Fahrwerke unter der Plattform, ergäbe sich ein zu steiler Auffahrwinkel und ein zu steiler Winkel der Deichsel des Transportanhängers im Betreib. So ist die Gesamtbreite des Hilfsfahrzeugs zumindest um die Breite der zwei Gurtbandfahrwerke größer als die des Transportanhängers. Um einen Straßentransport zu ermöglichen, schlägt die WO 2015 052 310 A1 vor, das Hilfsfahrzeug quer zur Straße zu transportieren. Alternativ nennt sie die Möglichkeit, die gesamte Plattform zusammenschiebbar bzw. klappbar auszuführen und die Gesamtbreite des Fahrzeugs so auf drei Meter zu reduzieren. Aus den Abmessungen und dem Gewicht einer solchen Plattform sowie der zum Zusammenklappen einer solchen Plattform geeigneten Klappmechanismen ergibt sich ein hohes Gesamtgewicht. Damit wird die zu verhindernde Schadverdichtung im Ackerboden wiederum unvorteilhaft erhöht.

Aus der US 3 926 272 A und der DE 197 04 319 A1 sind antriebslose Raupenfahrwerke mit je zwei Plattformen bekannt, zwischen denen sich ein Gelenk befindet, so dass sie zum Transport mit einem Kran oder Bagger angehoben und zusammengeklappt werden können.

Die Aufgabe der vorliegenden Erfindung ist es ein vorteilhaftes oder zumindest alternatives antriebsloses landwirtschaftliches Hilfsfahrzeug abzugeben, das eine schnelle und einfache Handhabung beim Auf- und Absatteln eines Lastenanhängers sowie beim Verändern der Gesamtbreite des Hilfsfahrzeugs bei einem möglichst geringen Gesamtgewicht bietet.

Diese Aufgabe wird erfindungsgemäß durch den Gegenstand des unabhängigen Anspruchs 1 gelöst. Vorteilhafte Ausführungsformen sind Gegenstand der abhängigen Ansprüche.

Die Erfindung beruht auf dem grundlegenden Gedanken, die Fläche oder Plattform eines antriebslosen landwirtschaftlichen Hilfsfahrzeugs aus Segmenten zusammenzusetzen. Dabei sind mindestens zwei Segmente als Fahrbahnsegmente und mindestens zwei Segmente als Trägersegmente vorzusehen. Diese können entsprechend der jeweilig wirkenden Belastung ausgestaltet werden. Um zusammen die Funktion der Plattform bilden zu können, sind mindestens zwei gleichartige Segmente durch eine erste Gelenkachse verbunden. Durch die Aufteilung der Fläche in einzelne Segmente und die jeweils belastungsgerechte Ausgestaltung der verschieden Segmentarte, kann eine daraus zusammengesetzte Fläche oder Plattform bei wesentlich reduziertem Gesamtgewicht den gleichen Belastungen standhalten, wie eine herkömmlich aufgebaute Plattform. So können auch sämtliche für ein Zusammenklappen der Fläche oder Plattform benötigte Bauteile genau auf die partiell wirkende Belastung abgestimmt und damit leichter ausgeführt werden. Dadurch ermöglicht die Erfindung eine Breitenreduzierung der Fläche oder Plattform des Hilfsfahrzeugs bei sehr vorteilhaft niedrigem Gesamtgewicht, ohne dabei auf andere Vorteile bekannter System verzichten zu müssen.

Durch den erfindungsgemäßen Aufbau der Flache oder Plattform zur lasttragenden Aufnahme eines Lasten-, Ausbring- und/oder Transportanhängers aus mindestens zwei Fahrbahnsegmenten und mindestens zwei Trägersegmenten, die durch eine erste Gelenkachse miteinander verbunden sind, ist bei ausreichender Stabilität ein sehr geringes Gesamtgewicht erzielbar. Dies wirkt sich positiv auf den Ackerboden aus, da schadhaften Verdichtungen wirksamer entgegengewirkt wird. Dazu ermöglicht der Aufbau die vorteilhaft kurze Rüstzeit durch Auf- und Abfahren des mit der Zugmaschine verbundenen Lasten-, Ausbring- und Transportanhängers auf die Fahrbahnsegmente. Dabei ist auch eine schnelle, einfache und komfortable Breitenreduzierung möglich. Besonders vorteilhaft ist es dabei, die mindestens zwei Fahrbahnsegmente wie auch die mindestens zwei Trägersegmente in etwa gleich zu dimensionieren. Daraus ergibt sich eine vorteilhaft breite Gesamtfläche in der Arbeitsstellung und ermöglicht gleichzeitig eine geringe Breite in der Transportstellung. So kann beim Einsatz herkömmlicher Gurtbandfahrwerke eine geringe Gesamtbreite, vorteilhafter Weise von unter 2,55 m, erreicht werden. Dadurch erlaubt der erfindungsgemäße Aufbau des Hilfsfahrzeugs gleichermaßen einen problemlosen Transport auch auf öffentlichen Straßen und nach sehr kurzer Rüstzeit eine besonders bodenschonende Feldfahrt.

In einer vorteilhaften Ausführung besteht die Fläche oder Plattform aus mehreren im Wesentlichen identischen, hintereinander angeordneten Fahrbahnsegmenten je Seite, Diese sind dabei auf mehreren Paaren von im Wesentlichen identischen, sich jeweils gegenüberliegenden Trägersegmenten gebildet. Jedes Paar Trägersegmente ist dabei durch eine erste Gelenkachse miteinander verbunden. Diese Ausführung erlaubt eine einfache Herstellung des Hilfsfahrzeugs und ermöglicht es, die Ausführung der Einzelteile noch genauer an die partiellen Anforderungen anzupassen. So kann das Gesamtgewicht des Hilfsfahrzeugs weiter reduziert werden.

Erfindungsgemäß ist mindestens eines der Trägersegmente durch mindestens eine zweite Gelenkachse mit einem Gurtbandlaufwerk verbunden. Insbesondere kann die Gelenkachse dabei an einem Längsträger angeordnet sein, der an der Innenseite des Gurtbandfahrwerks angeordnet ist. Die Gelenkachse kann auch an jedem anderen dazu geeigneten Bauteil der Gurtbandfahrwerke angeordnet sein. Diese Anordnung ermöglicht ein sehr einfaches und komfortables Überführen der Fläche oder Plattform von der Arbeitsstellung in die Transportstellung, Diese Anordnung erlaubt zudem, dass nicht die gesamte Längsseite der Plattform, je links und rechts, als Gelenkachse ausgeführt werden muss. Sie ermöglicht beispielsweise einen Aufbau, bei dem jeweils ein Trägersegment über eine zweite Gelenkachse mit einem Längsträger des Gurtbandfahrwerks verbunden ist. Dies ermöglicht wiederum eine vorteilhafte gewichtsoptimierte Bauteilgestaltung und ein reduziertes Gesamtgewicht.

In einer weiteren vorteilhaften Ausgestaltung der Erfindung sind zusätzlich bei vollständigem Überführen in die Arbeitsstellung und/oder in die Transportstellung rückstellbare Festlegeelemente in Wirkverbindung mit Gegenelementen bringbar. So ist die Fläche oder Plattform in der Arbeitsstellung und/oder in der Transportstellung festlegbar. Die Festlegung der beiden Stellungen ermöglicht dabei einen sicheren Betrieb auf dem Feld sowie einen sicheren Transport. Im Feldbetrieb kann sich dies vorteilhaft auf die Stabilität des Hilfsfahrzeugs auswirken und ermöglicht zudem zuverlässig Beschädigungen des Hilfsfahrzeugs oder des aufgefahrenen Anhängers zu vermeiden. Im Straßenbetrieb kann durch die Festlegung sicher verhindert werden, dass sich die Plattform während der Fahrt ungewollt verbreitert. So kann eine Gefährdung anderer Verkehrsteilnehmer in vorteilhafter Weise sicher verhindert werden, sowie auch eine Beschädigung des Hilfsfahrzeugs oder der Zugmaschine. Die Wirkverbindung und/oder Rückstellung der Festlege- und/oder Gegenelemente kann dabei auf jede geeignete Art erzeugt werden. Als einfachstes denkbares Beispiel können bekannte Bolzen und/oder Sicherungssplinte in dafür vorgesehene und in Übereinstimmung gebrachte Bohrungen oder Aussparungen gebracht werden. Diese können beispielsweise in dafür vorgesehene Laschen an den Außenbereichen der Trägersegmente angebracht sein. Eine gleichermaßen einfache und komfortabel zu bedienende Ausführungsform weist auf einer Seite der Gelenkachse ein Sperrriegel am Trägerelement und auf der gegenüberliegenden Seite der Gelenkachse einen geeignet ausgestalteten Bolzen auf. Bei Erreichen der Transportstellung kann dann der Sperrriegel mit dem Bolzen in Wirkverbindung gebracht werden und die Trägerelemente so zusammenhalten. Die hier genannten Beispiele sind jedoch keineswegs beschränkender Natur sondern dienen lediglich der Funktionsbeschreibung der Festlegeelemente und können durch alle geeigneten Festlegesysteme ersetzt sein. Des Weiteren können die Festlegeelemente beispielsweise durch geeignete Mittel angetrieben sein und so bei Betätigung ohne Kraftaufwand in Eingriff gebracht werden. Vor allem bei einer Betätigung die von der Zugmaschine oder aus größerer Entfernung ansteuerbar ist, ergibt sich eine sehr vorteilhaft einfache und komfortable Handhabung.

Zusätzlich oder alternativ kann in einer weiteren vorteilhaften Ausgestaltung mindestens eines der rückstellbaren Festlegeelemente mit mindestens einem zugeordneten Gegenelement bei Erreichen der Arbeitsstellung und/oder der Transportstellung automatisch zusammenwirken. So kann die jeweilige Stellung auf komfortable Weise automatisch rückstellbar festgelegt werden. Dies kann die Handhabung erleichtern und gleichzeitig bei kürzester Rüstzeit ein sicheres Festlegen der Stellungen gewähren. So kann die Verstellung von der Arbeitsstellung in die Transportstellung, und umgekehrt, bei voller Fahrt erfolgen. Beispielsweise kann an einem Trägersegment nahe der ersten Gelenkachse ein erster Endanschlag als Festlegeelement und am gegenüberliegenden Trägersegment ein korrespondierender zweiter Endanschlag als Gegenelement angeordnet sein. Die Endanschläge können dabei so angeordnet sein, dass sie beim Erreichen der Arbeitsstellung aneinander anliegen. Da die Trägersegmente jeweils fest an der Gelenkachse angeordnet sind, ist eine weitere Drehbewegung eines Trägersegments relativ zu dem anderen Trägersegment um die Gelenkachse nicht weiter möglich. So kann die Arbeitsstellung automatisch durch Zusammenwirken der Endanschläge festgelegt werden. Auch können beispielsweise federbelastete Sperrriegel oder Sperrhaken so angebracht sein, dass die Federkraft sie automatisch bei Erreichen der Transportstellung in Gegenelemente drückt. Zum Umrüsten auf die Arbeitsstellung können dann die Sperrriegel oder Sperrhaken gegen die Federkraft rückgestellt werden. So kann in vorteilhafter Weise die jeweilige Endstellung bei Erreichen automatisch festgelegt werden, was eine einfache, sichere und schnelle Breitenreduzierung ermöglicht. Gleichzeitig können alle hierfür benötigten Bauteile durch die Aufteilung in einzelne Fahrbahnsegmente und Trägersegmente genau entsprechend der partiellen Belastung und damit gewichtssparend ausgeführt werden.

In einer Weiteren besonders vorteilhaften Ausgestaltung kann zusätzlich oder alternativ mindestens einen Aktor vorgesehen sein, um das Hilfsfahrzeug von der Arbeitsstellung in die Transportstellung sowie von der Transportstellung in die Arbeitsstellung zu überführen. Dieser kann hydraulisch, pneumatisch oder elektrisch betätig werden. Das Wort *betätigen* ist dabei nicht auf die Ansteuerung des Aktors beschränkend, sonder steht vielmehr auch für die Betätigung des Aktors. Bei geeigneter Anbringposition kann sich ein besonders vorteilhaftes Hebelverhältnis zwischen Aktor und z.B. Trägersegment einstellen. So kann beispielsweise ein Hydraulikzylinder vorgesehen sein, der elektrisch oder hydraulisch angesteuert und hydraulisch betätigt werden kann. Besonders vorteilhaft ist es beispielsweise einen Hydraulikzylinder am Längsträger des Gurtbandfahrwerks einerseits und an einem der Trägerelemente andererseits anzuordnen. Dabei können auf beiden Seiten der Fläche oder Plattform je ein, oder jeweils mehrere Hydraulikzylinder angeordnet sein. Bei geeignet gewählter Anbringposition des Zylinders an dem Trägersegment kann sich ein vorteilhafter Hebel ergeben. So kann die Anbringposition am Trägerelement so gewählt sein, dass sie beabstandet zu einer gedachten Ebene liegt, die gleichermaßen die erste Gelenkachse und die zweite Gelenkachse schneidet. Der so entstehende Trägerabschnitt zwischen der zweiten Gelenkachse und der Anbringposition ermöglicht ein besonders vorteilhaftes Hebelverhältnis. So kann zur Überführung der Gesamterstreckungsbreite ein wesentlich kleinerer und leichterer Hydraulikzylinder eingesetzt werden. Dies ermöglicht eine komfortable Überführung bei vorteilhaft kostengünstiger und gleichzeitig gewichtssparender Bauteilgestaltung.

Zur besseren Kraftübertragung von den Rädern des Anhängers auf die Fahrbahnsegmente können an den Fahrbahnsegmenten entlang ihrer Längsseiten Erhöhungen angeordnet und/oder in variablem Abstand relativ zueinander anordenbar sein. Diese können eine Bewegung mindestens eines Rades des Lasten-, Ausbring-, und/oder Transportanhängers quer zur Längsrichtung verhindern. Diese so verbesserte Kraftübertragung wirkt sich positiv auf die Lenkbarkeit des Hilfsfahrzeugs vor allem bei Kurvenfahrten aus. Besonders vorteilhaft ist dies möglich, wenn auf der jeweiligen Innenseite der Fahrbahnsegmente eine Erhöhung fest angeformt ist und auf der jeweiligen Außenseite der Fahrbahnsegmente in variablem Abstand anordenbar ist. Die äußeren Erhöhungen können dazu beispielsweise in verschiedenen Abständen angeschraubt werden, aber auch in Führungen verstellbar sein. Solche in verstellbaren Führungen gelagerten Erhöhungen können beispielsweise pneumatisch, hydraulisch oder elektrisch an das Rad des Anhängers gedrückt werden. In besonders vorteilhafter Weise sind dabei die Erhöhungen von der Zugmaschine oder aus größerer Entfernung ansteuerbar. Der erfindungsgemäße Aufbau der Fläche oder Plattform aus den einzelnen Fahrbahnsegmenten ermöglicht dazu eine besonders gewichtssparende Ausgestaltung der Erhöhungen. So können die Fahrbahnsegmente beispielsweise aus Blechplatten bzw. aus Stahlplatten bestehen, die im Tiefziehverfahren oder einem Gesenk in eine versteifende Profilform gebracht werden. Dabei kann auch eine Erhöhung fest angeformt werden. Dabei können auch verschiedene Anschraubpositionen oder eine Führung für eine zweite Erhöhung mitangeformt werden. Dies ergibt eine vorteilhafte und rüstzeitsparende Möglichkeit, die Bewegung eines Rades quer zur Längsrichtung des Hilfsfahrzeugs zu verhindern.

Um die Handhabung des Hilfsfahrzeugs weiter zu verbessern und insbesondere den Einsatz eines Einachsanhängers zu ermöglichen kann eine Radhemmvorrichtung anbringbar sein, die die Bewegung mindestens eines Rades des Lasten-, Ausbring-, und/oder Transportanhängers entlang der Längsrichtung des Hilfsfahrzeugs verhindert. Die Radhemmvorrichtung kann dabei wie auch die Erhöhungen aus fest angeordneten und flexibel anordenbaren Bauteilen bestehen. Beispielsweise kann ein Radhemmschuh fest als erster Anschlag angeformt sein und ein zweiter Hemmschuh in variablem Abstand dazu angeschraubt werden, um das Rad so zu fixieren. Die Radhemmvorrichtung kann aber auch durch hebel- oder zangenartige Radgreifer gebildet sein, die hydraulisch, pneumatisch oder elektrisch aktiviert das Rad umgreifen und so hemmen können. In besonders vorteilhafter Weise können solche Radgreifer von der Zugmaschine aus oder aus größerer Entfernung angesteuert werden. Wie am Beispiel der Erhöhung zur Längshemmung des Rades beschrieben kann auch ein Hemmschuh bei der Fertigung eines Fahrbahnsegments mitangeformt werden. Somit ermöglicht die Radhemmvorrichtung auf gewichtsparende Weise die Kraftübertragung vom Anhänger auf das Hilfsfahrzeug weiter zu verbessern und ermöglicht insbesondere auch den Einsatz von Einachsanhängern. Dies erweitert zusätzlich den Einsatzbereich und die Flexibilität des Hilfsfahrzeugs auf besonders vorteilhafte Weise.

Um die Fertigung des Hilfsfahrzeugs zu erleichtern kann alternativ oder zusätzlich in einer weiteren Ausgestaltungsform mindestens ein Fahrbahnsegment einstückig mit mindestens einem Trägersegment ausgebildet sein. So kann vor allem die Anzahl der benötigten Einzelteile reduziert werden. Des Weiteren können mehrere Funktionen von einem Bauteil übernommen werden, ohne dadurch ein unnötig erhöhtes Gesamtgewicht hervorzurufen. So kann die Fertigung durch die einstückige Ausgestaltung mindestens eines Fahrbahnsegments mit mindestens einem Trägersegment positiv beeinflusst werden, ohne das Gesamtgewicht negativ zu beeinflussen.

In einer weiteren besonders vorteilhaften Ausgestaltung ist zusätzlich oder alternativ eine Verbindungs- und/oder Versorgungseinrichtung zur Übertragung und/oder Bereitstellung von Daten, und/oder elektrischer pneumatischer und/oder hydraulischer Energie zwischen dem Hilfsfahrzeug, dem Lasten-, Ausbring-, und/oder Transportanhänger und/oder der Zugmaschine anbringbar. Dadurch können beispielsweise Steuerbefehle oder Antriebsenergie für die Rückstellung der Festlegungsvorrichtungen oder für die Aktoren zum Überführen von der Arbeitsstellung in die Transportstellung von der Zugmaschine auf das Hilfsfahrzeug übertragen werden. Auch können beispielsweise Informationen oder Steuerbefehle vom Hilfsfahrzeug zur Zugmaschine übertragen werden. So kann beispielsweise beim Einsatz bremsbarer Gurtbandlaufwerke eine Erfassungseinrichtung für ein Bremssignal der Zugmachine, wie eine Kamera zur optischen Erfassung der Bremslichter der Zugmaschine, angebracht sein. Bei erfasster Betätigung kann eine Abbremsung der Gurtbandlaufwerke erfolgen und eine Information darüber an die Zugmaschine übertragen werden. Auch kann beispielsweise der Ladezustand des Anhängers erfasst und an die Zugmaschine übertragen werden. Dies kann beispielsweise durch eine optische Erfassung mittels einer Kamera erfolgen. Auch kann beispielsweise die für die Aktoren benötigte Energie durch die Versorgungseinrichtung bereitgestellt oder übertragen werden. Dadurch kann in vorteilhafter Weise auch ein Hydrauliksystem des Hilfsfahrzeugs an das Hydrauliksystem der Zugmaschine angeschlossen werden. So können die Elemente und Aktoren des Hilfsfahrzeugs von der Zugmaschine aus versorgt und betätigt werden. Dadurch werden am Hilfsfahrzeug keine separaten Antriebe wie Elektromotoren oder Hydraulikpumpen benötigt. Dies ermöglicht wiederum eine einfache, komfortable und schnelle Bedienung des Hilfsfahrzeugs bei vorteilhaft niedrigem Gesamtgewicht.

In einer weiteren besonders vorteilhaften Ausgestaltung ist zusätzlich oder alternativ zumindest in der Transportstellung eine Kopplungseinrichtung zur mechanischen Kopplung an eine Zugmaschine anbringbar oder bewegbar angebracht. Eine solche Kopplungseinrichtung kann beispielweise durch eine schwenkbar angeordnete Zugdeichsel gebildet sein. Diese kann derart schwenkbar sein, dass sie die Handhabung des Hilfsfahrzeugs in der Arbeitsstellung nicht behindert und dass sie in der Transportstellung in eine vorteilhafte Ankuppelposition bringbar ist. Eine derartige Zugdeichsel kann sehr einfach mit der Zugmaschine verbunden werden. Selbstverständlich kann zusätzlich wie bei jeglichen Anhängern üblich auch eine elektrische Steckverbindung angeordnet sein, die Beleuchtungseinrichtungen des Hilfsfahrzeugs mit einer Beleuchtungssteuerung der Zugmaschine koppelt. So können die geltenden Auflagen zur Beleuchtung von Fahrzeugen im Straßenverkehr eingehalten werden. In einer alternativen Ausführung kann die Kopplungseinrichtung in der Arbeitsstellung auch abnehmbar sein. So ermöglicht die angebrachte oder anbringbare Kopplungseinrichtung eine sehr einfache und sicher komfortable und/oder gewichtssparende Gestaltung der Kopplungseinrichtung und somit auch des Hilfsfahrzeugs.

Die Erfindung umfasst zudem noch einen Zugverbund, bestehend aus einer Zugmaschine, insbesondere einem Traktor, und einem daran angehängten Lasten-, Ausbring- und/oder Transportanhänger, der auf der Fläche oder Plattform eines erfindungsgemäßen Hilfsfahrzeugs aufgenommen ist.

Der Lasten-, Ausbring- und/oder Transportanhänger ist dabei an der Zugmaschine angehängt; d.h. die Koppelverbindung zwischen dem Anhänger und der Zugmaschine bleibt sowohl beim Auffahren auf das erfindungsgemäße Hilfsfahrzeug, bei dessen Verwendung auf dem Acker wie auch bei der Abfahrt vom Hilfsfahrzeug und der anschließenden Transportfahrt auf befestigtem Untergrund (nun ohne Hilfsfahrzeug) erhalten.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind ohne den Rahmen der vorliegenden Erfindung zu verlassen. Insbesondere sind die genannten Merkmale in diesem Rahmen jeweils nicht auf die genannte Anzahl beschränkt, so dass in Einzahl genannte Merkmale durchaus mehrfach vorhanden und mehrfach vorkommende Merkmale auch in Einzahl vorhanden sein können.

Bevorzugte Ausführungsbeispiele der Erfindung sind in der Zeichnung dargestellt und werden in der nachfolgenden Beschreibung näher erläutert, wobei sich gleiche Bezugszeichen auf gleiche oder ähnliche oder funktional gleiche Bauteile beziehen.

Dabei zeigen jeweils schematisch:
- Fig. 1:: ein erfindungsgemäßes Hilfsfahrzeug in perspektivischer Ansicht,
- Fig. 2:: ein Hilfsfahrzeug nach Fig. 1 in der Heckansicht,
- Fig. 3:: eine Darstellung wie Fig. 2, jedoch mit Anhänger,
- Fig. 4a:: eine Darstellung wie Fig. 2, in der Arbeitsstellung,
- Fig. 4b:: eine Darstellung wie Fig. 4a, bei der Breitenreduzierung,
- Fig. 4c:: eine Darstellung wie Fig. 4a, in der Transportstellung,
- Fig. 5a:: eine Detailansicht der Festlegung der Transportstellung,
- Fig. 5b:: eine Detailansicht wie in Fig. 5a, in festgelegtem Zustand,
- Fig. 6:: eine Detailansicht der Festlegung der Arbeitsstellung,
- Fig. 7:: eine Detailansicht der variabel anordenbaren Erhöhungen,
- Fig. 8:: eine Seitenansicht der Plattform mit schematisch dargestellter Radhemmvorrichtung,
- Fig. 9a:: eine Draufsicht auf die weggeschwenkte Kopplungseinrichtung,
- Fig. 9b:: eine Ansicht wie Fig. 9a, mit Kopplungseinrichtung in Transportstellung und
- Fig. 10:: ein erfindungsgemäßes Hilfsfahrzeug im Feldeinsatz.

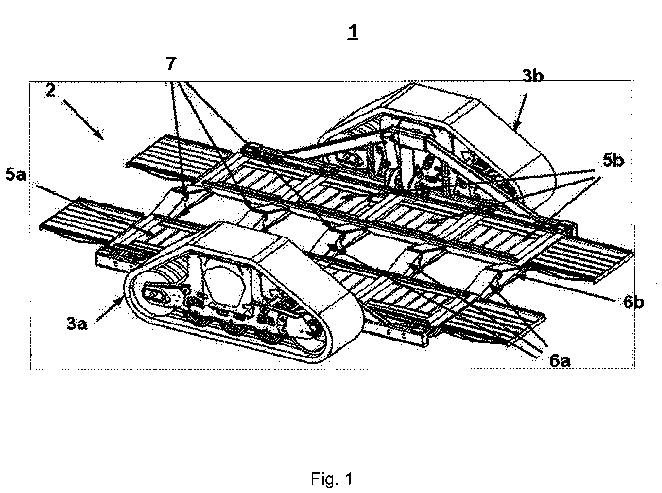

Entsprechend der Fig.1 umfasst das erfindungsgemäße antriebslose Hilfsfahrzeug 1 zwei parallele Gurtbandlaufwerke 3a, 3b und eine dazwischen befindliche Fläche 2, die einen Lasten-, Ausbring- und/oder Transportanhänger aufnehmen kann. Die Fläche 2 ist dabei aus mehreren Fahrbahnsegmenten 5a, 5b aufgebaut, die auf Trägersegmenten 6a, 6b angeordnet sind. Dabei ist jeweils ein linkes Trägersegment 6a und ein rechtes Trägersegment 6b gegenüberliegend angeordnet und durch eine erste Gelenkachse 7 verbunden. Hintereinander sind fünf Paar von Trägersegmenten 6a, 6b zischen den Gurtbandfahrwerken 3a, 3b angeordnet. Darauf sind die Fahrbahnen aus jeweils vier linken Fahrbahnsegmenten 5a und vier rechten Fahrbahnsegmenten 5b aufgebaut. Bereits in dieser Darstellung ist die Materialeinsparung, die durch den erfindungsgemäßen Aufbau entsteht deutlich ersichtlich. Die daraus resultierende Gewichtseinsparung wirkt sich vorteilhaft auf die Verdichtungen des Ackerbodens aus.

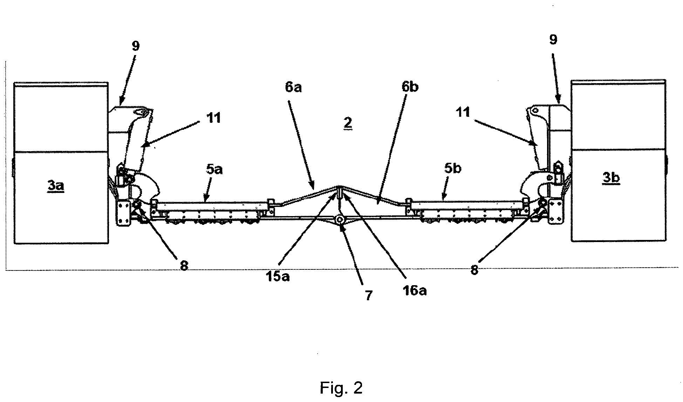

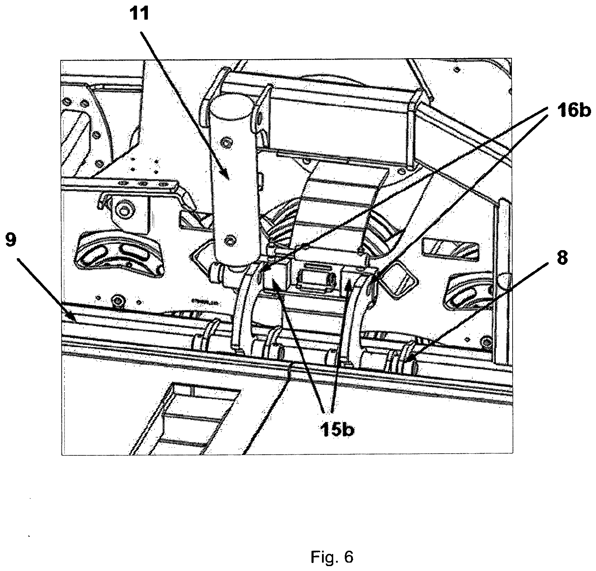

Wie in Fig. 2 dargestellt, sind die Trägersegmente 6a, 6b jeweils über eine zweite Gelenkachse 8 mit einem Längsträger 9 des Gurtbandlaufwerks 3a, 3b verbunden. Die Trägersegmente 6a, 6b sind dabei aus Hohlprofilen aufgebaut, die zusätzliche Versteifungsrippen aufweisen. Die Fahrbahnsegmente 5a, 5b sind aus geprägten Metallplatten aufgebaut, um weiteres Gewicht einzusparen. Zur ersten Gelenkachse 7 hin sind die Trägersegmente 6a, 6b trapezartig erweitert, da hier partiell eine höhere Belastung herrscht. An ihrem mittigen oberen Ende sind zwei Anschlagelemente als erstes Festlegeelement 15a am linken Trägerelement 6a und als erstes Gegenelement 16a am rechten Trägerelement 6b angeordnet. Wie in Fig. 2 deutlich erkennbar wirken diese Elemente zusammen und bilden einen Endanschlag. Sie begrenzen die mögliche Drehung der Trägerelemente 6a und 6b um die erste Gelenkachse 8. An den Außenseiten der Trägerelemente 6a, 6b sind jeweils als Hydraulikzylinder ausgeführte Aktoren 11 angebracht. Diese sind einerseits an den Gurtbandfahrwerken 3a, 3b bzw. an deren Längsträgern 9 angeordnet. Die jeweils zweiten Enden der als Hydraulikzylinder ausgeführten Aktoren 11 sind jeweils mit einem Trägersegment 6a, 6b verbunden. Um den Aktor 11 zur Kosten- und Gewichtseinsparung möglichst klein ausführen zu können ist der Anlenkpunkt der Aktoren am Trägersegment an einem angeformten, bogenartigen Hebel angeordnet. Er liegt oberhalb einer gedachten Ebene, die durch die erste Gelenkachse 7 und die zweite Gelenkachse 8 verläuft und ist deutlicher in der Detaildarstellung in Fig. 6 ersichtlich.

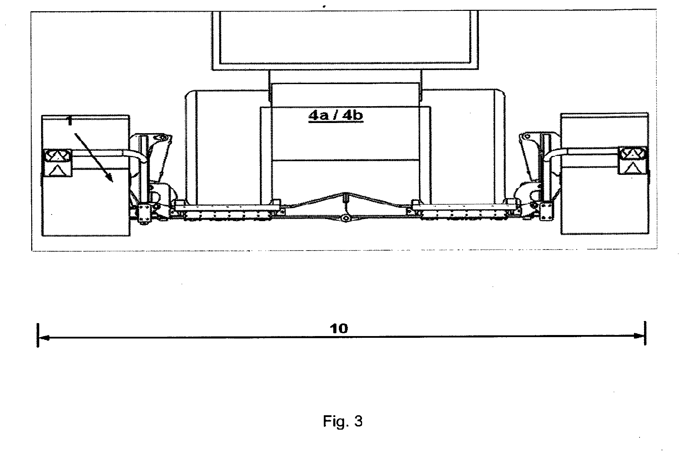

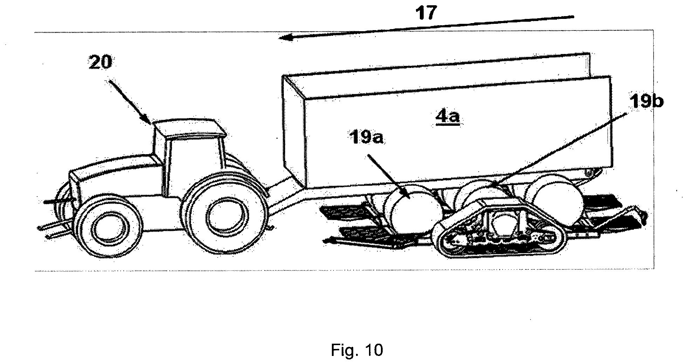

Wie in Fig. 3 dargestellt können die Fahrbahnsegmente 5a, 5b einen Transportanhänger 4a (die Anzahl der Achsen ist z.B. in Fig. 10 ersichtlich) aufnehmen. Die Gesamterstreckungsbreite 10 des Hilfsfahrzeugs ist dabei um die Abmessungen der Gurtbandlaufwerke 3a, 3b breiter als die des Transportanhängers.

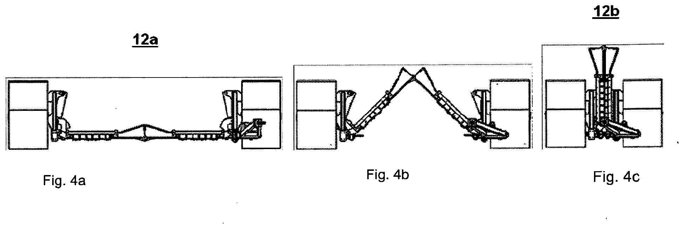

Um das Hilfsfahrzeug unter Einhaltung der gültigen Vorschriften auf öffentlichen Straßen bewegen zu dürfen, beispielsweise um es von einem Feld auf ein anderes Feld zu überführen, muss die Gesamterstreckungsbreite 10 reduziert werden. Dazu werden die Aktoren 11 betätigt. Das Hilfsfahrzeug wird dabei aus der Arbeitsstellung 12, wie sie in Fig. 4a ersichtlich ist zusammengeklappt. Fig. 4b zeigt dabei einen Zwischenschritt. Fig. 4c zeigt das zum Transport in die Transportstellung 12b überführte Hilfsfahrzeug.

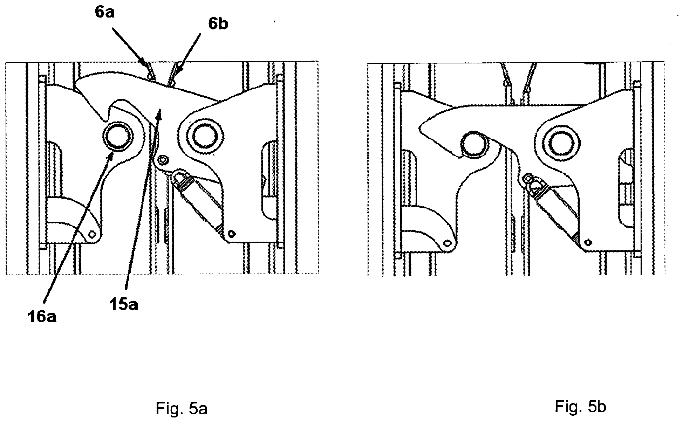

Wie in den Detailansichten der Fig. 5a und Fig. 5b dargestellt ist eine automatische rückstellbare Festlegeeinrichtung vorgesehen, die beim Erreichen der Transportstellung 12b automatisch einrastet. So wird sichergestellt, dass das Hilfsfahrzeug beim Transport nicht auseinanderklappen kann. Dazu ist an einem rechten Trägersegment 6b ein erstes Festlegeelement 15a als federvorgespannter Sicherungshaken angebracht. Dieser wird automatisch beim Zusammenklappen durch einen Bolzen am rechten Trägersegment 6a, der ein erstes Gegenelement 16a bildet, ausgelenkt. Beim Erreichen der Transportstellung 12b schnappt der Sicherungshaken durch die Federvorspannung automatisch über den Bolzen. So werden das Festlegeelement 15a und das Gegenelement 16a automatisch in Wirkverbindung gebracht und die Transportstellung 12b automatisch festgelegt. Über einen nicht dargestellten Lösemechanismus können der Sicherungshaken gelöst und die Trägerelemente 6a, 6b durch die Aktoren 11 wieder in die Arbeitsstellung 12a gebracht werden. Durch den Aufbau der Plattform 2 aus den Fahrbahnsegmenten 5a, 5b und den Trägersegmenten 6a, 6b können die Festlegeelemente vergleichsweise gewichtssparend ausgeführt werden.

Wie die Detaildarstellung in Fig. 6 zeigt, sind auch in der Nähe der zweiten Gelenkachse 8 derartige Festlegevorrichtungen vorgesehen. Dabei sind die zweiten Festlegelemente 15b als federvorgespannte Sperrriegel ausgeführt. Die als zweite Gegenelemente 16b ausgeführten Enden der Trägersegmente 6a, 6b liegen an den Sperrriegeln an, so dass sich die Trägersegmente 6a, 6b nicht weiter um die zweite Gelenkachse 8 drehen können. Um zu ermöglichen, dass die Aktoren 11 die Trägersegmente wieder in die Transportstellung 12b bringen können, müssen die Sperrriegel gegen die Federkraft zurückgestellt werden. Dafür sind hier Stellzylinder angeordnet. Wiederum erlaubt der erfindungsgemäße Aufbau der Plattform 2 aus den Fahrbahnsegmenten 5a, 5b und den Trägersegmenten 6a, 6b eine vergleichsweise gewichtssparende Ausführung der Festlegevorrichtung.

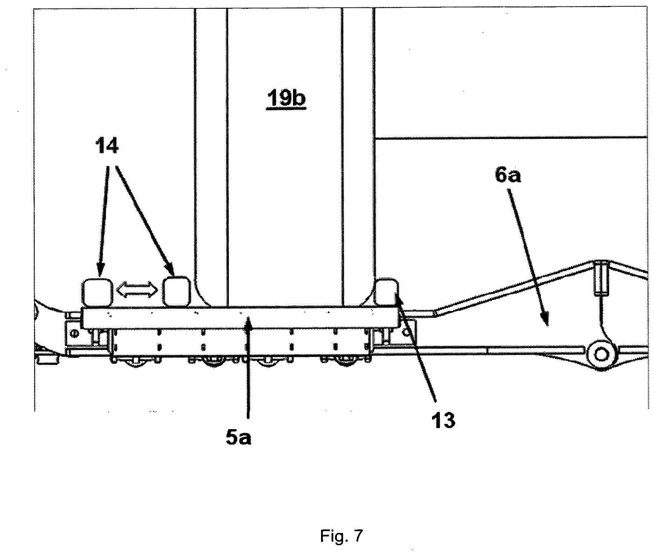

Fig. 7 zeigt ein Schnittbild durch das linke Fahrbahnsegment 5a auf der Höhe des zweiten Rades eines Transportanhängers 19b. Zur verbesserten Kraftübertragung vom Anhänger auf das Hilfsfahrzeug, die vor allem das Lenken bei Kurvenfahrten erleichtert, sind Erhöhungen 13 an der Innenseite der Fahrbahnsegmente 5a, 5b angeordnet. Wie dargestellt ist die Erhöhung 13 an der Innenseite des linken Fahrbahnsegments 5a fest angeordnet. Dagegen ist die zweite Erhöhung 14 auf der Radaußenseite in verschiedenen Abständen anschraubbar. So kann die Kraftübertragung auch bei Anhängern mit unterschiedlichen Spur- oder Radbreiten einfach und sicher verbessert werden, ohne das Gesamtgewicht des Hilfsfahrzeugs wesentlich zu erhöhen.

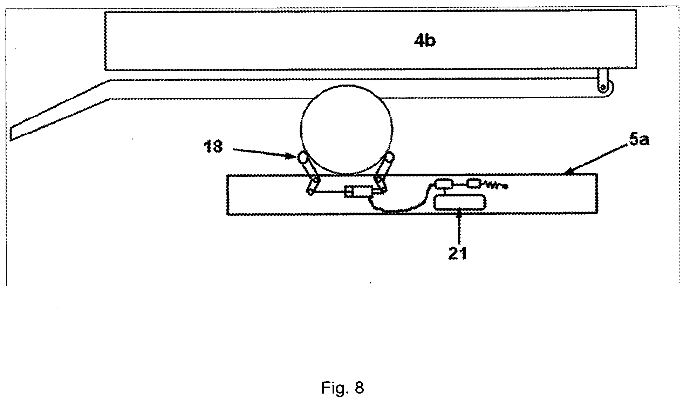

Wie in Fig. 8 dargestellt, ist eine Radhemmvorrichtung 18 vorgesehen, die eine Bewegung des Anhängers in Längsrichtung 17 (siehe Fig. 10) zuverlässig verhindert. Die Radhemmvorrichtung 18 weist dazu zwei Radhemmschuhe auf, die bei Bedarf betätigt werden. Diese Radhemmschuhe werden über einen Hebelmechanismus an das Rad des Anhängers geklappt und umgreifen es teilweise. Die Radhemmvorrichtung 18 wird dabei durch eine Versorgungseinrichtung 21 mit der benötigten Energie versorgt. Die Ansteuerung der Radhemmvorrichtung 18 erfolgt dabei drahtlos über eine Fernsteuerung und die in der Versorgungseinrichtung 21 enthaltenen Antenne. So kann durch die Radhemmvorrichtung 18 auch bei einem Transportanhänger mit einer Achse 4b genügend Kraft auf das Hilfsfahrzeug 1 übertragen werden um ein sicheres Lenken bei Kurvenfahrten zu ermöglichen. Damit kann durch die Radhemmvorrichtung 18 auch ein Einachsanhänger mit dem erfindungsgemäßen Hilfsfahrzeug 1 einfach und sicher bewegt werden.

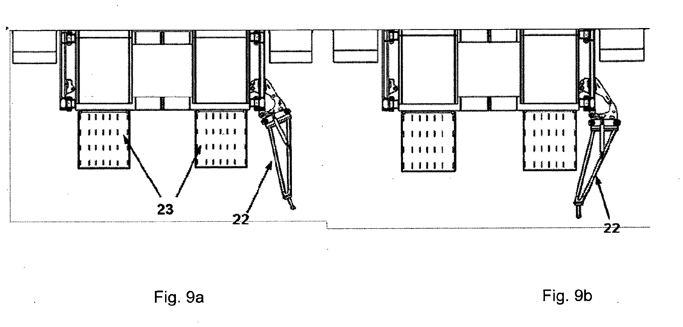

Wie die Draufsicht auf die Fläche 2 in Fig. 9a und 9b zeigt, weist das Hilfsfahrzeug 1 eine schwenkbar ausgebildete Kopplungseinrichtung 22 auf. Diese weitgehend als herkömmliche Deichsel ausgeführte Kopplungseinrichtung 22 ist in der Arbeitsstellung wegschwenkbar um den Arbeitsablauf nicht zu behindern. Zum Transport des Hilfsfahrzeugs wird sie in der Transportstellung sehr einfach durch schwenken in Position gebracht. Des Weiteren sind in Fig. 9a Auffahrplatten erkennbar, die federnd an den Fahrbahnsegmenten 5a, 5b aufgehängt sind und zum Auffahren des Anhängers nach unten bewegbar sind. In der Fig. 9a ist beispielsweise die Kopplungseinrichtung 22 wie auch das Hilfsfahrzeug 1 in Arbeitsstellung gezeigt. In der Figur 9b ist die Kopplungseinrichtung 22 bereits in die Transportstellung geschwenkt, das Hilfsfahrzeug 1 aber noch in der ursprünglichen Transportstellung.

Fig. 10 zeigt ein erfindungsgemäßes Hilfsfahrzeug 1 im Feldeinsatz. Dazu ist ein Transportanhänger 4a mit drei Achsen auf die Fahrbahnsegmente 5a, 5b aufgefahren. Der Transportanhänger weist dabei ein erstes Rad 19a, ein zweites Rad 19b und eine Längsrichtung 17 auf. Die Längsrichtung 17 ist dabei mit der Längsrichtung des Hilfsfahrzeugs deckungsgleich. Zum Antrieb und zur Lenkung des Zugverbundes bleibt der Transportanhänger mit der Zugmaschine 20 verbunden.

Zum Beladen des Hilfsfahrzeuges 1, beispielsweise am Straßenrand, fährt die Zugmaschine 20 mit angehängtem Lasten-, Ausbring- und/oder Transportanhänger 4a über die Plattform des Hilfsfahrzeuges 1 drüber solange bis der Transportanhänger 4a die richtige Position auf dem erfindungsgemäßen Hilfsfahrzeuges erreicht hat. Nach der Arretierung des Lasten-, Ausbring- und/oder Transportanhängers 4a mittels seiner Feststellbremse oder/und mit der Radhemmvorrichtung 18 fährt der Zugverbund, nämlich die Zugmaschine 20, der Lasten-, Ausbring- und/oder Transportanhänger 4a samt dem Hilfsanhänger 1 bodenschonend auf der landwirtschaftlichen Fläche. Nach getaner Arbeit fährt die Zugmaschine 20 den beladenen bzw. entladenen Lasten-, Ausbring- und/oder Transportanhänger 4a der auf dem Hilfsanhänger 1 steht wieder zum Straßenrand. Dort wird die Arretierung gelöst und die Zugmaschine 20 fährt den Transportanhänger 4a vom Hilfsanhänger 1 herunter um auf eigener Bereifung den Straßentransport zu ermöglichen. Der Hilfsanhänger 1 steht am Straßenrand sofort wieder einer anderen Zugmaschine samt Transportanhänger zur Verfügung.

Da es sich bei dem vorhergehenden, detailliert beschriebenen Hilfsfahrzeug um ein Ausführungsbeispiel handelt, kann es in üblicher Weise vom Fachmann in einem weiten Umfang modifiziert werden, ohne den Bereich der Erfindung zu verlassen. Insbesondere können die konkreten Ausgestaltungen der einzelnen Segmente und der Festlegeeinrichtungen abweichen. Weiterhin schließt die Verwendung der unbestimmten Artikel "ein" bzw. "eine" nicht aus, dass die betreffenden Merkmale auch mehrfach bzw. mehrmals vorhanden sein können. Dazu können an Stelle von Gurtbandlaufwerken jederzeit andere Fahrwerksanordnungen mit ähnlich bodenschonenden Eigenschaften verwendet werden.

### BEZUGSZEICHENLISTE

- 1: antriebsloses landwirtschaftliches Hilfsfahrzeug
- 2: Fläche oder Plattform
- 3a: linkes Gurtbandlaufwerk
- 3b: rechtes Gurtbandlaufwerk
- 4a: Transportanhänger mit drei Achsen
- 4b: Transportanhänger mit einer Achse
- 5a: linkes Fahrbahnsegment
- 5b: rechtes Fahrbahnsegment
- 6a: linkes Trägersegment
- 6b: rechts Trägersegment
- 7: erste Gelenkachse
- 8: zweite Gelenkachse
- 9: Längsträger
- 10: Gesamterstreckungsbreite
- 11: Aktor
- 12a: Arbeitsstellung
- 12b: Transportstellung
- 13: erste Erhöhung
- 14: zweite Erhöhung
- 15a: erstes Festlegeelement
- 15b: zweites Fetslegeelement
- 16a: erstes Gegenelement
- 16b: zweites Gegenelement
- 17: Längsrichtung
- 18: Radhemmvorrichtung
- 19a: erstes Rad des Transportanhängers
- 19b: zweites Rad des Transportanhängers
- 20: Zugmaschine
- 21: Versorgungseinrichtung
- 22: Kopplungseinrichtung
- 23: Auffahrplatte

## Patentansprüche

1. Antriebsloses landwirtschaftliches Hilfsfahrzeug (1) mit mindestens einer Fläche oder Plattform (2), wobei die Fläche oder Plattform (2) zur lasttragenden Aufnahme eines Lasten-, Ausbring- und/oder Transportanhängers (4a, 4b) ausgebildet ist, jeweils einem Gurtbandlaufwerk (3a, 3b) an den beiden Längsseiten der Fläche oder Plattform (2), wobei die Fläche oder Plattform (2) zwischen den Gurtbandlaufwerken (3a, 3b) zum Verändern der Gesamtbreite zusammen- oder auseinanderklappbar ist, wobei die Fläche oder Plattform (2) aus mindestens zwei Fahrbahnsegmenten (5a, 5b) und mindestens zwei Trägersegmenten (6a, 6b) gebildet ist, und die mindestens zwei Trägersegmente (6a, 6b) durch mindestens eine erste Gelenkachse (7) miteinander verbunden sind, **dadurch gekennzeichnet, dass** mindestens eines der Trägersegmente (6a, 6b) durch mindestens eine zweite Gelenkachse (8) mit einem Gurtbandlaufwerk (3a, 3b) verbunden ist.

2. Antriebsloses landwirtschaftliches Hilfsfahrzeug (1) nach Anspruch 1, **dadurch gekennzeichnet, dass** in einer Arbeitsstellung (12a) und/oder in einer Transportstellung (12b) rückstellbare Festlegeelemente (15a, 15b) in Wirkverbindung mit Gegenelementen (16a, 16b) bringbar sind und so die Fläche oder Plattform (2) in der Arbeitsstellung (12a) und/oder der Transportstellung (12b) festlegbar ist.

3. Antriebsloses landwirtschaftliches Hilfsfahrzeug (1) nach Anspruch 2, **dadurch gekennzeichnet, dass** mindestens eines der rückstellbaren Festlegeelemente (15a, 15b) und mindestens ein zugeordnetes Gegenelement (16a, 16b) bei Erreichen der Arbeitsstellung (12a) und/oder der Transportstellung (12b) automatisch zusammenwirken und die erreichte Stellung (12a, 12b) automatisch rückstellbar festlegen.

4. Antriebsloses landwirtschaftliches Hilfsfahrzeug (1) nach einem der vorangehenden Ansprüche, **dadurch gekennzeichnet, dass** mindestens einen Aktor (11) zum Überführen der Gesamterstreckungsbreite (10) von der Arbeitsstellung (12a) in die Transportstellung (12b), sowie von der Transportstellung (12b) in die Arbeitsstellung (12a) vorgesehen ist, der hydraulisch, pneumatisch, oder elektrisch betätig wird.

5. Antriebsloses landwirtschaftliches Hilfsfahrzeug (1) nach einem der vorangehenden Ansprüche, **dadurch gekennzeichnet, dass** an den Fahrbahnsegmenten (5a, 5b) entlang ihrer Längsseiten Erhöhungen (13, 14) angeordnet und/oder in variablem Abstand relativ zueinander anordenbar sind, die eine Bewegung mindestens eines Rades (19a, 19b) des Lasten-, Ausbring-, und/oder Transportanhängers (4a, 4b) quer zur Längsrichtung (17) verhindern.

6. Antriebsloses landwirtschaftliches Hilfsfahrzeug (1) nach einem der vorangehenden Ansprüche, **dadurch gekennzeichnet, dass** eine Radhemmvorrichtung (18) anbringbar ist, die die Bewegung mindestens eines Rades des Lasten-, Ausbring-, und/oder Transportanhängers (4a, -4b) entlang der Längsrichtung (17) des Hilfsfahrzeugs (1) verhindert.

7. Antriebsloses landwirtschaftliches Hilfsfahrzeug (1) nach einem der vorangehenden Ansprüche, **dadurch gekennzeichnet, dass** mindestens ein Fahrbahnsegment (5a, 5b) einstückig mit mindestens einem Trägersegment (6a, 6b) ausgebildet ist.

8. Antriebsloses landwirtschaftliches Hilfsfahrzeug (1) nach einem der vorangehenden Ansprüche, **dadurch gekennzeichnet, dass** eine Verbindungs- und/oder Versorgungseinrichtung (21) zur Übertragung und/oder Bereitstellung von Daten, und/oder elektrischer, pneumatischer und/oder hydraulischer Energie zwischen dem Hilfsfahrzeug (1), dem Lasten-, Ausbring-, und/oder Transportanhänger (4a, 4b) und/oder der Zugmaschine (20) anbringbar ist.

9. Antriebsloses landwirtschaftliches Hilfsfahrzeug (1) nach einem der vorangehenden Ansprüche, **dadurch gekennzeichnet, dass** zumindest in der Transportstellung (12b) eine Kopplungseinrichtung (22) zur mechanischen Kopplung an eine Zugmaschine (20) anbringbar oder bewegbar angebracht ist.

10. Zugverbund, bestehend aus einer Zugmaschine (20), insbesondere einem Traktor, und einem daran angehängten Lasten-; Ausbring- und/oder Transportanhänger (4a, 4b), der auf der Fläche oder Plattform (2) eines Hilfsfahrzeugs nach einem der Ansprüche 1 bis 9 aufgenommen ist.

## Claims

1. Driveless agricultural support vehicle (1) having at least one surface or platform (2), wherein the surface or platform (2) is designed for accommodating a cargo trailer, spreader trailer and/or transport trailer (4a, 4b) in a load-bearing manner, and having a respective rubber track system (3a, 3b) on the two longitudinal sides of the surface or platform (2), wherein the surface or platform (2) can be slung together or slung apart between the rubber track systems (3a, 3b) in order for the overall width to be altered, wherein the surface or platform (2) is formed from at least two carriageway segments (5a, 5b) and at least two carrier segments (6a, 6b), and the at least two carrier segments (6a, 6b) are connected to one another by at least one first joint pin (7), **characterized in that** at least one of the carrier segments (6a, 6b) is connected to a rubber track system (3a, 3b) by at least one second joint pin (8) .

2. Driveless agricultural support vehicle (1) according to Claim 1, **characterized in that**, in an operating position (12a) and/or in a transport position (12b), restorable securing elements (15a, 15b) can be brought into operative connection with mating elements (16a, 16b) and it is thus possible for the surface or platform (2) to be secured in the operating position (12a) and/or the transport position (12b).

3. Driveless agricultural support vehicle (1) according to Claim 2, **characterized in that**, when the operating position (12a) and/or the transport position (12b) is reached, at least one of the restorable securing elements (15a, 15b) and at least one associated mating element (16a, 16b) interact automatically and secure said reached position (12a, 12b) in an automatically restorable manner.

4. Driveless agricultural support vehicle (1) according to one of the preceding claims, **characterized by** the provision of at least one actuator (11) for transferring the overall width (10) from the operating position (12a) into the transport position (12b), and from the transport position (12b) into the operating position (12a), said actuator being actuated hydraulically, pneumatically or electrically.

5. Driveless agricultural support vehicle (1) according to one of the preceding claims, **characterized in that** elevations (13, 14) are arranged, and/or can be arranged at variable distances relative to one another, on the carriageway segments (5a, 5b), along the longitudinal sides of the latter, and prevent at least one wheel (19a, 19b) of the cargo trailer, spreader trailer and/or transport trailer (4a, 4b) from moving transversely to the longitudinal direction (17).

6. Driveless agricultural support vehicle (1) according to one of the preceding claims, **characterized in that** a wheel restrainer (18) can be fitted to prevent at least one wheel of the cargo trailer, spreader trailer and/or transport trailer (4a, 4b) from moving along the longitudinal direction (17) of the support vehicle (1).

7. Driveless agricultural support vehicle (1) according to one of the preceding claims, **characterized in that** at least one carriageway segment (5a, 5b) is formed in one piece with at least one carrier segment (6a, 6b).

8. Driveless agricultural support vehicle (1) according to one of the preceding claims, **characterized in that** it is possible to fit a connection and/or supply device (21) for transmitting and/or providing data and/or electrical, pneumatic and/or hydraulic energy between the support vehicle (1), the cargo trailer, spreader trailer and/or transport trailer (4a, 4b) and/or the towing vehicle (20).

9. Driveless agricultural support vehicle (1) according to one of the preceding claims, **characterized in that**, at least in the transport position (12b), a coupling device (22) can be fitted, or is fitted in a movable manner, for mechanical coupling to a towing vehicle (20).

10. Towing assembly comprising a towing vehicle (20), in particular a tractor, and a cargo trailer, spreader trailer and/or transport trailer (4a, 4b), which is attached to the towing vehicle and is accommodated on the surface or platform (2) of a support vehicle according to one of Claims 1 to 9.

## Revendications

1. Véhicule auxiliaire agricole (1) sans entraînement, comprenant au moins une surface ou une plateforme (2), la surface ou la plateforme (2) étant configurée pour accueillir avec support de charge une remorque (4a, 4b) porte-charge, d'épandage et/ou de transport, respectivement un mécanisme d'entraînement à courroie (3a, 3b) des deux côtés longitudinaux de la surface ou de la plateforme (2), la surface ou la plateforme (2) pouvant être repliée ou déployée entre les mécanismes d'entraînement à courroie (3a, 3b) en vue de modifier la largeur totale, la surface ou la plateforme (2) étant formée par au moins deux segments de bande de circulation (5a, 5b) et au moins deux segments d'éléments porteurs (6a, 6b), et les au moins deux segments d'éléments porteurs (6a, 6b) étant reliés l'un à l'autre par au moins un premier axe articulé (7), **caractérisé en ce qu'**au moins l'un des segments d'éléments porteurs (6a, 6b) est reliée par au moins un deuxième axe articulé (8) à un mécanisme d'entraînement à courroie (3a, 3b).

2. Véhicule auxiliaire agricole (1) sans entraînement selon la revendication 1, **caractérisé en ce que** des éléments de blocage (15a, 15b) qui peuvent être ramenés dans une position de travail (12a) et/ou dans une position de transport (12b) peuvent être amenés en liaison active avec des éléments homologues (16a, 16b) et la surface ou la plateforme (2) peut ainsi être bloquée dans la position de travail (12a) et/ou dans la position de transport (12b).

3. Véhicule auxiliaire agricole (1) sans entraînement selon la revendication 2, **caractérisé en ce qu'**au moins l'un des éléments de blocage (15a, 15b) réversibles et au moins un des éléments homologues (16a, 16b) associé coopèrent automatiquement en atteignant la position de travail (12a) et/ou la position de transport (12b) et bloquent automatiquement la position (12a, 12b) atteinte de manière réversible.

4. Véhicule auxiliaire agricole (1) sans entraînement selon l'une des revendications précédentes, **caractérisé en ce qu'**au moins un actionneur (11) destiné à amener la largeur d'extension totale (10) de la position de travail (12a) à la position de transport (12b) ainsi que de la position de transport (12b) à la position de travail (12a) est présente, lequel est actionné hydrauliquement, pneumatique ou électriquement.

5. Véhicule auxiliaire agricole (1) sans entraînement selon l'une des revendications précédentes, **caractérisé en ce que** des rehausses (13, 14) sont disposées et/ou peuvent être disposées à un écart variable les unes par rapport aux autres le long des côtés longitudinaux des segments de bande de circulation (5a, 5b), lesquelles empêchent un mouvement d'au moins une roue (19a, 19b) de la remorque (4a, 4b) porte-charge, d'épandage et/ou de transport transversalement par rapport à la direction longitudinale (17).

6. Véhicule auxiliaire agricole (1) sans entraînement selon l'une des revendications précédentes, **caractérisé en ce qu'**un arrangement de blocage de roue (18) peut être monté, lequel empêche le mouvement d'au moins une roue de la remorque (4a, 4b) porte-charge, d'épandage et/ou de transport le long de la direction longitudinale (17) du véhicule auxiliaire (1).

7. Véhicule auxiliaire agricole (1) sans entraînement selon l'une des revendications précédentes, **caractérisé en ce qu'**au moins un segment de bande de circulation (5a, 5b) est réalisé d'un seul tenant avec au moins un segment d'élément porteur (6a, 6b).

8. Véhicule auxiliaire agricole (1) sans entraînement selon l'une des revendications précédentes, **caractérisé en ce qu'**un dispositif de liaison et/ou d'alimentation (21) destiné à transmettre et/ou à fournir des données et/ou de l'énergie électrique, pneumatique et/ou hydraulique peut être monté entre le véhicule auxiliaire (1), la remorque (4a, 4b) porte-charge, d'épandage et/ou de transport et/ou la machine de traction (20).

9. Véhicule auxiliaire agricole (1) sans entraînement selon l'une des revendications précédentes, **caractérisé en ce qu'**un dispositif d'accouplement (22) servant à l'accouplement mécanique à une machine de traction (20) peut être monté ou est monté de manière mobile au moins dans la position de transport (12b).

10. Ensemble de traction, composé d'une machine de traction (20), notamment un tracteur, et d'une remorque (4a, 4b) porte-charge, d'épandage et/ou de transport attelée à celle-ci, qui est accueillie sur la surface ou la plateforme (2) d'un véhicule auxiliaire selon l'une des revendications 1 à 9.
